# EUROPÄISCHE PATENTANMELDUNG

(11) **EP 4 818 107 A1**
(43) Veröffentlichungstag der Anmeldung: **07.10.2026**
(21) Anmeldenummer: 25167346.3
(22) Anmeldetag: 31.03.2025
(51) Int. Cl.: B66F 9/24, G06Q 10/0639

(54) **VERFAHREN ZUM BEWERTEN DES VERHALTENS VON BEDIENERN VON FLURFÖRDERZEUGEN SOWIE SYSTEM ZUM DURCHFÜHREN EINES DERARTIGEN VERFAHRENS**

(71) Anmelder: Jungheinrich AG, 22047 Hamburg (DE)
(72) Erfinder: Hagenauer, Stefan, 84051 Essenbach (DE)
(74) Vertreter: Weickmann & Weickmann PartmbB

(57) **Zusammenfassung**

Die vorliegende Erfindung betrifft ein Verfahren zum Bewerten des Verhaltens von Bedienern von Flurförderzeugen (F), umfassend die folgenden Schritte eines Definierens (S1) von gewünschten Verhaltensformen des Bedieners anhand wenigstens einer erfassbaren Betriebseigenschaft des Flurförderzeugs (F), eines Überwachens (S3) der wenigstens einen erfassbaren Betriebseigenschaft des Flurförderzeugs (F) mittels wenigstens einer entsprechenden Sensoreinheit (104), eines Auswertens (S4) der wenigstens einen überwachten Betriebseigenschaft anhand der definierten Verhaltensformen und eines Darstellens (S5) und/oder Verarbeiten von Ergebnissen der Auswertung. Ferner betrifft die Erfindung ein System zum Durchführen eines derartigen Verfahrens.

## Beschreibung

Die vorliegende Erfindung betrifft ein Verfahren zum Bewerten des Verhaltens von Bedienern von Flurförderzeugen sowie ein System zum Durchführen eines derartigen Verfahrens.

Flurförderzeuge, beispielsweise Gegengewichtstapler und ähnliche Geräte, sind Industriegüter, die von Unternehmen, beispielsweise aus der Logistikbranche, gekauft oder gemietet werden. Im täglichen Einsatz sollen sie eine möglichst hohe Umschlagsleistung bei andererseits möglichst geringen Kosten generieren. Hohe Umschlagsleistungen können hierbei beispielsweise über hohe Fahr- und Hubgeschwindigkeiten erreicht werden, sowie durch fortgeschrittene Bedienvorgänge, wie beispielsweise ein gleichzeitiges Fahren und Heben eines Lastaufnahmemittels.

Gerade derartige fortgeschrittene Fahrmanöver können jedoch die Sicherheit beim Betrieb entsprechender Fahrzeuge gefährden. Insbesondere ist hierbei das Sichtfeld eines sich im Fahrzeug befindenden Bedieners eingeschränkt, und das Fahrzeug selbst hat, gerade in einem beladenen Zustand, eine erhebliche Masse und damit Trägheit. Ferner befinden sich üblicherweise in Fahrbereichen entsprechender Anlagen ebenfalls Personen, zu transportierende Ware, umliegende Infrastruktur und weitere bewegliche Objekte. Hohe Fahrgeschwindigkeiten erhöhen dementsprechend in der Regel ebenfalls die Unfallgefahr und die Unfallintensität.

Teilweise wurde aus diesen Gründen in Firmen, welche derartige Flurförderzeuge einsetzen, aufgrund von zu häufigen Unfällen und Schäden an der Fahrzeugflotte und der Infrastruktur die Maximalgeschwindigkeit der gesamten Fahrzeugflotte reduziert, um das eben beschriebene Problem in den Griff zu bekommen. Hierbei ist zu beachten, dass teilweise ebenfalls beobachtet werden konnte, dass Bediener entsprechender Fahrzeuge wenig Respekt oder Verantwortungsbewusstsein bei Schäden an ihren Fahrzeugen und der Infrastruktur hatten.

Dementsprechend waren erhebliche Unterschiede in der Fahrweise von Bedienern beobachtet worden, wobei sich die Bediener teilweise jedoch ebenfalls unter Druck sahen, entsprechend riskante Fahrmanöver durchzuführen, um die von ihnen erwartete Umschlagleistung erreichen zu können. Es zeigt sich hierbei andererseits ebenfalls, dass die tatsächlich zu erreichende Umschlagleistung stärker von der Erfahrung des jeweiligen Bedieners mit dem Fahrzeug und der zu handhabenden Ware im jeweiligen Betrieb abhängt als von der Herangehensweise der jeweiligen Bediener, sodass es als optimales Szenario angesehen werden kann, positives Verhalten der Bediener mittels ermunternder Rückmeldungen zu fördern, um gleichzeitig eine erhöhte Umschlagleistung und weniger Schäden an Fahrzeugen und Infrastruktur erzielen zu können.

Aus dem Stand der Technik sind in diesem Zusammenhang Vorgehensweisen bekannt, in welchen beispielsweise Aufprallsensoren Fahrzeugbeschleunigungen messen und anhand von unerwünschten Ereignissen Bediener eine Einweisung oder eine andere Art von Bestrafung erhalten, dies ist jedoch aus heutiger Sicht keine optimale Herangehensweise, da hierunter die Motivation der Bediener leiden kann und sich das Betriebsklima verschlechtern kann. Auch können aufgrund von früheren Ereignissen vorgenommene Einschränkungen in den Funktionen von Fahrzeugen zur Erhöhung ihrer Betriebssicherheit die Umschlagsleistung in der entsprechenden Anlage verringern.

Dem hingegen ist es die Aufgabe der vorliegenden Erfindung, Anreize zu einem Einhalten eines erwünschten Verhaltens von Bedienern von Flurförderzeugen zu schaffen, sodass weniger Schäden an Fahrzeugen und Infrastruktur entstehen, was sich wiederum in geringeren Kosten für die Fahrzeugflotte, einer höheren Verfügbarkeit der Fahrzeuge sowie gegebenenfalls sogar einer erhöhten Umschlagleistung niederschlägt. Insbesondere im Fall von Mietgeräten und Fahrzeugen in Wartungsverträgen sollen in diesem Zusammenhang Zeitaufwendungen und Kosten im Rahmen entsprechender Wartungsverträge reduziert werden.

Hierbei ist zu beachten, dass Bediener derartiger Fahrzeuge häufig eine recht enge Bindung an ihr jeweiliges Fahrzeug entwickeln und dieses teilweise als Statussymbol begreifen. Dementsprechend werden Einschränkungen in Betriebsparametern davon, beispielsweise eine verringerte Maximalgeschwindigkeit aufgrund früherer unsicherer Fahrweise, häufig mit großem Unmut aufgenommen. Andererseits kann eine Personalisierung oder allgemein eine dem Fahrzeug bzw. dem Bediener zuordenbare positive Rückmeldung den Status oder die Selbstwahrnehmung des Bedieners erhöhen.

Somit zielt die vorliegende Erfindung darauf ab, ein positives Verhalten der Bediener zu fördern, um den Zustand von entsprechenden Fahrzeugen über ihre Lebensdauer sowie die Infrastruktur des Betreibers der Flurförderzeuge zu schonen. Hieraus resultieren entsprechende Vorteile für die Betreiber der Fahrzeuge in Form verringerter Kosten und niedrigerer Standzeiten.

Zu diesem Zweck und zur Lösung der oben beschriebenen Aufgabe umfasst das erfindungsgemäße Verfahren die Schritte eines Definierens von gewünschten Verhaltensformen des entsprechenden Bedieners anhand wenigstens einer erfassbaren Betriebseigenschaft des Flurförderzeugs, eines Überwachens der wenigstens einen erfassbaren Betriebseigenschaft des Flurförderzeugs mittels wenigstens einer entsprechenden Sensoreinheit, eines Auswertens der wenigstens einen überwachten Betriebseigenschaft anhand der definierten Verhaltensformen und eines Darstellens und/oder Verarbeitens von Ergebnissen dieser Auswertung. Dementsprechend kann durch das Definieren von gewünschten Verhaltensformen für Bediener diesen im Falle einer Einhaltung davon eine positive Rückmeldung gegeben werden, wobei selbstverständlich nicht ausgeschlossen sein soll, dass bei einem Verletzen der gewünschten Verhaltensformen auch negative Rückmeldungen möglich sein sollen.

Hierbei kann der Schritt des Auswertens insbesondere einen Schritt eines Klassifizierens anhand wenigstens einer vorbestimmten Klassifizierungsbedingung umfassen, wobei sich eine derartige Klassifizierung auf einzelne gewünschte Verhaltensformen beziehen kann und diese beispielsweise in ein schlechtes, ein angemessenes, ein gutes und ein hervorragendes Einhalten der entsprechenden Verhaltensformen klassifiziert werden können. Ferner besteht auch die Möglichkeit, jeweilige Klassifizierungen mehrerer einzelner gewünschter Verhaltensformen zu einer Gesamtklassifizierung zusammenzufassen, welche beispielsweise nach Kategorien der Fahrzeugbedienung zusammengefasst werden könnte. Beispiele hierfür könnten ein sicheres Fahren, eine sichere Hubgerüstbedienung, eine zuverlässige Wartung, eine sichere Standortauswahl, ein zuverlässiger Batterieumgang, sichere Pausenzeiten und ähnliches sein, wobei auf die einzelnen genannten Beispiele teilweise weiter unten in anderen Zusammenhängen noch eingegangen werden wird.

Zudem kann das Verfahren ein Einstufen des Bedieners gemäß einem Stufensystem auf Grundlage der Auswertung umfassen. Hierbei kann es sich um ein relativ einfaches Punktesystem oder ähnliches im Zusammenhang mit einzelnen gewünschten Verhaltensformen und ihrer Einhaltung über einen gewissen Zeitraum oder auch ein komplexeres und ggf. an Videospiele erinnerndes Level-System handeln, wobei Bedienern bei dauerhaft gutem Einhalten von gewünschten Verhaltensweisen ein Level-Aufstieg und damit zusammenhängende Privilegien oder Belohnungen zugewiesen werden können, beispielsweise eine Erhöhung der Maximalgeschwindigkeit des entsprechenden Fahrzeugs bei jedem Level-Aufstieg. **In** diesem Zusammenhang kann auf weitere durch Videospiele inspirierte Vorgänge zurückgegriffen werden, beispielsweise eine Anzeige des momentanen Levels eines Benutzers an seinem Fahrzeug, das Ausgeben von entsprechenden Jingles bei einem Level-Aufstieg oder ein Anzeigen der entsprechenden Level mehrerer Bediener auf einem Scoreboard in einem Gemeinschaftsraum. Hierbei ist allgemein denkbar, dass entsprechende Bewertungen von Bedienern, einschließlich der eben diskutierten Einstufungen, in bestimmten Intervallen zurückgesetzt oder erneuert werden.

Alternativ oder zusätzlich kann das erfindungsgemäße Verfahren einen Schritt eines Anpassens wenigstens eines Betriebsparameters des Flurförderzeugs anhand der Ergebnisse der Auswertung umfassen. Hierbei kann beispielsweise daran gedacht werden, die maximale Fahrgeschwindigkeit und/oder Beschleunigung des Fahrzeugs für einen Fahrer sukzessive zu erhöhen, wenn dieser über einen längeren Zeitraum gewünschte Verhaltensformen eingehalten hat. Weitere mögliche Beispiele derartiger anzupassender Betriebsparameter können eine Reduzierung einer Lautstärke von Warntönen, beispielsweise von 100 dB auf einen reduzierten, aber noch sicheren Wert von beispielsweise 95 dB, oder eine Änderung von Warntönen hinsichtlich ihrer Frequenz, Abfolge, Kadenz oder Melodie sein, um diese für den Fahrer angenehmer zu machen. In ähnlicher Weise können normale Fahrzeugtöne oder Anzeigen verkürzt dargestellt werden, sofern entsprechende Hinweise im Rahmen einer gewünschten Verhaltensform befolgt werden, was sich beispielsweise auf Wartungsintervalle oder Pausenzeiten beziehen kann.

Weiterhin kann das erfindungsgemäße Verfahren ein Identifizieren eines entsprechenden Bedieners bei einer Inbetriebnahme des Flurförderzeugs umfassen, sodass es ermöglicht wird, das Verhalten von Bedienern fahrzeugübergreifend zu verfolgen, um entsprechenden Arbeitssituationen Rechnung zu tragen, in welchen mehreren Bedienern nicht ständig dasselbe Fahrzeug zugeordnet ist. Eine derartige Identifikation eines Bedieners bei einer Inbetriebnahme eines Flurförderzeugs kann unter anderem durch ein Identifikationsmerkmal auf einer Keycard, einen bedienerspezifischen Schlüssel, eine bedienerspezifische Zugangsnummer, einen RFID-Chip in der Kleidung des Bedieners, die Erkennung von Fingerabdrücken, einer Iris der Augen, des Gesichts, der Stimme, Gesten oder Venen des entsprechenden Bedieners, eine Geräteerkennung, beispielsweise von einem Smartphone, einem Handheld oder einem Tablet via Bluetooth, oder eine Abstandsmessung zu einem Funkschlüssel erfolgen. Ferner könnte ein jeweiliger Benutzer durch dessen Fahrverhalten oder Bedienverhalten identifiziert werden, indem beispielsweise Machine-Learning-Algorithmen die Benutzereingaben einem bestimmten Bediener zuzuordnen lernen.

Wenngleich prinzipiell denkbar ist, die Auswertung, Darstellung und/oder Verarbeitung sämtlicher in dem erfindungsgemäßen Verfahren anfallender Daten rein lokal am jeweiligen Flurförderzeug mittels einer geeigneten dort vorgesehenen Steuereinheit durchzuführen, so kann das erfindungsgemäße Verfahren ferner ein Übertragen von Sensordaten und/oder Ergebnissen der Auswertung an eine zentrale Verwaltungseinheit umfassen, welche räumlich getrennt von dem Flurförderzeug vorgesehen ist und beispielsweise ebenfalls das Darstellen und/oder Verarbeiten der Ergebnisse der Auswertung vornehmen kann. Hierdurch wird eine zentrale Datensammlung ermöglicht, welche es beispielsweise in einem Unternehmen erlaubt, die entsprechenden Verhaltensformen einer Mehrzahl von Bedienern zentral zu sammeln und zu analysieren bzw. in Verhältnis zueinander zu stellen.

Weiterhin kann das Darstellen der Ergebnisse der Auswertung eine optische und/oder akustische Ausgabe für den Bediener umfassen, beispielsweise können Fahrzeugleuchten ein dauerhaft positives Verhalten signalisieren oder sich Fahrzeugtöne, beispielsweise beim Starten, Abschalten, Notaus-Drücken oder andere Tastentöne, basierend auf der Auswertung der wenigstens einen überwachten Betriebseigenschaft ändern. Ferner wäre es in diesem Zusammenhang möglich, Individualisierungsfunktionen für Bediener unmittelbar am Fahrzeug vorzusehen, welche diesem eine entsprechende Rückmeldung über das Einhalten der gewünschten Verhaltensformen geben können, beispielsweise mittels Bildern an einem Startbildschirm, Farben in Bediendisplays, Farben von Leuchten am Fahrzeug, Farbverläufe oder -verhalten von Lauflichtern an der Außenseite oder am Unterboden des entsprechenden Fahrzeugs oder ähnliches, sowie Vibrationsfunktionen im Sitz, am Lenkrad an der Armauflage, im Fußraum oder auch geruchliche Systeme, die zum Beispiel bestimmtes Verhalten mit einem bestimmten Duft belohnen. Insbesondere im Zusammenhang mit dem oben beschriebenen Level-System könnte ferner beispielsweise daran gedacht werden, bei Level 1 das Außendisplay zu aktivieren und einen Stapler mit großen Augen und Kindchenschema anzuzeigen, wobei in dieser Anzeige dann mit jedem aufgestiegenen Level der Stapler erwachsener und "erfahrener" werden kann. Ferner könnten Belohnungs-Jingles beim Levelaufstieg ertönen und mit höheren Leveln länger werden, beispielsweise zuerst drei Noten, später fünf Noten lang, beim Erreichen des höchsten Levels abschließend Fanfaren mit zehn Tönen.

Neben einer Rückmeldefunktion für den Fahrer können die genannten Rückmeldemechanismen auch umliegende Personen über das ausgewertete Verhalten des Nutzers informieren. Zum Beispiel könnte das Einstiegslevel eines Nutzers zu einem roten Rundumlicht führen, während ein Nutzer mit einem gewünschten Verhalten über eine vorgegebene zu einem grünen Rundumlicht aufsteigen könnte. Es wäre auch denkbar, dass Rundumlichter ausgeschaltet werden, wenn Nutzer ein gewünschtes Verhalten zeigen und so umstehende Personen nicht mehr gewarnt werden müssen. Unter Umständen könnten auch zusätzliche Anzeigen oder Lichter bzw. Leuchten speziell für diesen Zweck an Fahrzeugen vorgesehen werden, beispielsweise am Heck, der Front oder den Seiten der Kabine oder am Unterboden, mittels welcher entsprechend Rückmeldung über das Einhalten der gewünschten Verhaltensformen durch den jeweiligen Bediener gegeben werden kann, beispielsweise unter Berücksichtigung des oben bereits angesprochenen Level-Systems.

Wie weiter oben ebenfalls bereits angedeutet, kann das Überwachen der wenigstens einen Betriebseigenschaft des Flurförderzeugs eine Erfassung wenigstens einer Betriebszeit und/oder Position des Flurförderzeugs umfassen, also beispielsweise mittels geeigneter Ortungssensoren, ob ein entsprechendes Fahrzeug während seiner Betriebszeit übermäßig lange in Fahrwegen oder an anderen nicht sinnvollen Orten steht. Weiterhin kann auf diese Weise mittels geeigneter Sensortypen sichergestellt werden, dass Bediener vorgeschriebene Pausenzeiten einhalten, Wartungsintervalle in vorgesehener Weise berücksichtigt werden, Verschleißteile oder Schmiermittel regelmäßig erneuert werden und ähnliches.

Alternativ oder zusätzlich könnte die wenigstens eine erfassbare Betriebseigenschaft eine Betriebseigenschaft eines Antriebssystems, eines elektrischen Speichersystems und/oder einer Arbeitsfunktion des Flurförderzeugs umfassen. Auch hier sind zahlreiche konkrete Ausführungsbeispiele denkbar, so könnte mittels eines oder mehrerer Beschleunigungssensoren ermittelt werden, ob ein Bediener in der Regel sanft über Bodenschwellen fährt und weich bremst oder ob er andererseits durch eine grobe Fahrweise auffällt, wie beispielsweise ein regelmäßiges Fahren gegen Ware oder Infrastruktur. **In** ähnlicher Weise könnte mittels eines Drehzahlsensors des Fahrzeugs sowie durch gleichzeitige Ermittlung der Hubhöhe eines Lastaufnahmemittels des Fahrzeugs erfasst werden, ob Bediener mit angehobenen Gabeln längere Strecken oder mit höherer Geschwindigkeit fahren, oder mittels des genannten Drehzahlsensors und eines Winkelsensors für das Hubgerüst, ob Bediener mit nach vorne gekippten Zinken längere Strecken oder mit höherer Geschwindigkeit oder sogar mit aufgenommenen Lasten fahren.

Ferner könnte mittels einer Auswertung von Hebe-Senk-Vorgängen im Zusammenhang mit Fahrstrecken ermittelt werden, wie viel Ware über welche Strecke transportiert wird, und es könnte in Verbindung mit einer Überlasterkennung ermittelt werden, ob Fahrzeuge nahe oder gar über ihrer Überlastgrenze betrieben werden. Des Weiteren könnte erfasst werden, ob das spezifische Fahrverhalten eines Bedieners zu durchdrehenden Reifen bei Brems- und Anfahrtsvorgängen führt. Ebenfalls könnte überwacht werden, ob Traktionsbatterien entsprechender Fahrzeuge bei zu hohen Temperaturen betrieben werden, was ihre Lebensdauer verringern würde, und/oder ob eine Heizung beziehungsweise Kühlung bei offener Kabinentür eines derartigen Fahrzeugs im Winter beziehungsweise Sommer verwendet wird, was den Energieverbrauch des Fahrzeugs erhöhen würde.

Auch Anbaugeräte des Fahrzeugs könnten in entsprechender Weise überwacht werden, beispielsweise ob Bediener laute Musik über die Lautsprecher einer Multimediabox ihres Fahrzeugs hören, was sie von Umweltgeräuschen ablenken könnte. Zudem könnte gegebenenfalls ein Körperschallsensor eingesetzt werden, welcher sich im Gegensatz zu einem Beschleunigungssensor durch hohe Frequenzen und niedrige Amplituden auszeichnet, wodurch sich beispielsweise Geräusche von einer angefahrenen Gabel mit geringer Masse von einem Anfahren mit dem Heck des Fahrzeugs mit großer Masse unterscheiden lassen. Eine entsprechende Auswertung könnte in einem solchem Ausführungsbeispiel darauf beruhen, dass der Umgang mit den Gabelzinken weniger kritisch zu sehen ist als mit dem Heck und eine gewünschte Verhaltensform des Bedieners unabhängig vom Umgang mit den Gabelzinken sein kann, um eine freie Handhabung von Lasten zu ermöglichen.

Wie weiter oben bereits angedeutet, betrifft die vorliegende Erfindung gemäß einem zweiten Aspekt ein System zum Bewerten des Verhaltens von Bedienern von Flurförderzeugen mittels eines erfindungsgemäßen Verfahrens der eben beschriebenen Art, das System umfassend eine Speichereinheit, auf welcher Daten bezüglich der gewünschten Verhaltensformen hinterlegt sind, wenigstens eine Sensoreinheit zum Überwachen der wenigstens einen erfassbaren Betriebseigenschaft, eine Auswerteeinheit zum Auswerten der wenigstens einen überwachten Betriebseigenschaft und eine Darstellungseinheit und/oder eine Verarbeitungseinheit.

Hierbei versteht sich, dass die entsprechenden Komponenten des erfindungsgemäßen Systems in unterschiedlicher Weise zwischen einem entsprechenden Fahrzeug und einer zentralen Instanz aufgeteilt sein können, sodass beispielsweise die Auswerteeinheit entweder dem Fahrzeug zugeordnet sein kann oder extern zu diesem vorgesehen sein kann und dementsprechend über geeignete Kommunikationskanäle die entsprechenden Sensorausgaben erhält. Ähnliches gilt für die Darstellungseinheit und/oder die Verarbeitungseinheit, welche ebenfalls entweder unmittelbar am Fahrzeug selbst oder dezentral angeordnet sein können. Hierbei versteht sich ferner, dass in dezentralen Architekturen mehrere individuelle Fahrzeuge einer einzelnen zentralen Instanz zugeordnet sein können, welche dementsprechend eine zentrale Verarbeitung von Daten vornimmt, welche von der Mehrzahl von Fahrzeugen individuell geliefert werden.

Des Weiteren sei darauf hingewiesen, dass die oben im Zusammenhang mit dem erfindungsgemäßen Verfahren beschriebenen Weiterbildungen der Erfindung ebenfalls in dem erfindungsgemäßen System implementiert sein können, sodass für die jeweiligen Erfindungsaspekte und Weiterbildungen des erfindungsgemäßen Verfahrens auch im Rahmen des beanspruchten Systems Schutz beansprucht sein soll.

Beispielsweise kann in dieser Weise das erfindungsgemäße System ferner eine, vorzugsweise dem Flurförderzeug zugeordnete, Identifikationseinheit zum Identifizieren eines Benutzers und/oder eine optische und/oder akustische Anzeigeeinheit umfassen, welche insbesondere ebenfalls dem Flurförderzeug zugeordnet sein kann. Wie eben bereits angedeutet, kann das System zudem eine zentrale Verwaltungseinheit umfassen, welche mit wenigstens einem Flurförderzeug in Datenverbindung steht, wobei hierbei auf beliebige geeignete Kommunikationsprotokolle zurückgegriffen werden kann, entweder offene Standards oder frei zu definierende proprietäre Standards.

Weitere Merkmale und Vorteile der vorliegenden Erfindung werden aus der nachfolgenden Beschreibung von Ausführungsformen davon noch deutlicher, wenn diese zusammen mit den beiliegenden Figuren betrachtet wird. Diese zeigen im Einzelnen:
- Figur 1: eine schematische Darstellung eines erfindungsgemäßen Systems zum Bewerten des Verhaltens von Bedienern von Flurförderzeugen; und
- Figur 2: ein Flussdiagramm eines erfindungsgemäßen Verfahrens zum Bewerten des Verhaltens von Bedienern von Flurförderzeugen mittels des Systems aus Figur 1.

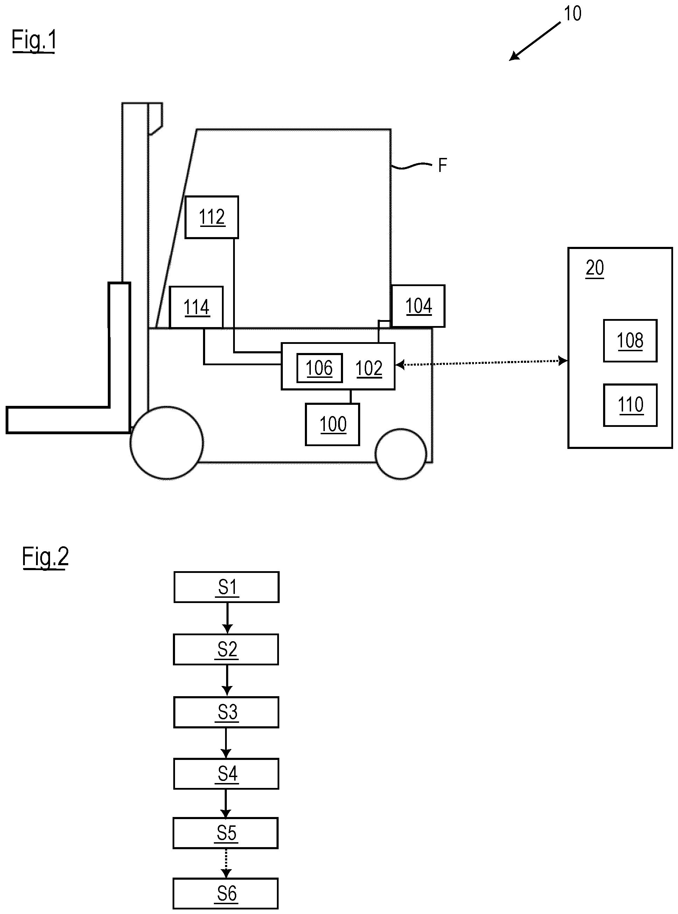

Figur 1 zeigt zunächst einmal in rein schematischer Weise ein erfindungsgemäßes System, mit welchem ein Verfahren zum Bewerten des Verhaltens von Bedienern von Flurförderzeugen durchgeführt werden kann, und welches allgemein mit dem Bezugszeichen 10 bezeichnet ist. Hierbei ist das entsprechende Flurförderzeug in dem Beispiel aus Figur 1 in Form eines an sich bekannten Gegengewichtstaplers ausgeführt und mit dem Bezugszeichen F bezeichnet. Das Flurförderzeug ist im Folgenden nicht detailliert beschrieben, es umfasst jedoch übliche Komponenten wie einen Fahrzeugkörper, ein Hubgerüst, eine Fahrerkabine, ein Antriebssystem mit Rädern zur Fortbewegung und ähnliches. Des Weiteren umfasst das System 10 eine zentrale Verwaltungseinheit 20, welche mit dem Flurförderzeug bzw. einer weiter unten noch erwähnten Steuereinheit 102 davon über eine drahtlose Kommunikationsverbindung in Kontakt steht.

Es sei an dieser Stelle darauf hingewiesen, dass die im Folgenden beschriebenen funktionellen Komponenten des Systems 10 in unterschiedlichen Ausführungsvarianten davon teilweise entweder dem Flurförderzeug F selbst oder der zentralen Verwaltungseinheit 20 zugeordnet sein können, und dass die entsprechenden Funktionalitäten in geeigneter Weise zwischen dem Flurförderzeug F und der zentralen Verwaltungseinheit 20 aufgeteilt sein können. Es sind ferner Ausführungsformen denkbar, in welchen auf die zentrale Verwaltungseinheit 20 vollständig verzichtet wird und sämtliche Komponenten des erfindungsgemäßen Systems 10 in das Flurförderzeug F integriert sind.

Hierbei umfasst das System 10 zunächst eine Speichereinheit 100, welche im vorliegenden Beispiel einer Steuereinheit 102 des Flurförderzeugs F zugeordnet ist und auf welcher Daten bezüglich gewünschter Verhaltensformen von Benutzern des Flurförderzeugs F hinterlegt sind. Diese gewünschten Verhaltensformen beziehen sich auf erfassbare Betriebseigenschaften des Flurförderzeugs F, welche mittels wenigstens einer Sensoreinheit 104 überwacht werden, welche ebenfalls dem Flurförderzeug F unmittelbar zugeordnet sein kann und welche mit der Steuereinheit 102 in Kommunikationsverbindung steht, um entsprechende Daten für eine weitere Verarbeitung davon zu liefern.

Hierbei kann einerseits auf ohnehin an bekannten Flurförderzeugen F vorgesehene Sensoreinheiten 104 zurückgegriffen werden, beispielsweise Drehzahlsensoren oder Hubhöhensensoren. Andererseits ist es ebenfalls denkbar, dedizierte Sensoreinheiten 104 speziell zum Durchführen des erfindungsgemäßen Verfahrens vorzusehen, welche unter anderem die Fahrweise oder das Einhalten von vorgegebenen Ruhezeiten von Bedienern erfassen könnten. Weiterhin ist denkbar, auch externe Sensoreinheiten 104 außerhalb des Flurförderzeugs F in das erfindungsgemäße System 10 zu integrieren, welche beispielsweise Bewegungsmuster und Aufenthaltsorte des Fahrzeugs F erfassen könnten.

Die von der wenigstens einen Sensoreinheit 104 gelieferten Daten bezüglich der wenigstens einen Betriebseigenschaft des Fahrzeugs F werden von einer Auswerteeinheit 106 hinsichtlich entsprechender gewünschter Verhaltensformen ausgewertet, welche wie angesprochen in der Speichereinheit 100 hinterlegt sind. Hierbei kann die Auswerteeinheit 106 durch die Steuereinheit 102 des Flurförderzeugs F gebildet oder betriebsmäßig mit ihr gekoppelt sein, wie in Figur 1 schematisch angedeutet. Auch an dieser Stelle sei darauf hingewiesen, dass wenngleich in der hier gezeigten Variante der Erfindung die Auswerteeinheit 106 in dem Flurförderzeug F integriert, sie andererseits auch der zentralen Verwaltungseinheit 20 zugeordnet sein könnte, wobei in einem solchen Fall die Daten der wenigstens einen Sensoreinheit 104 zunächst einmal für ihre Auswertung zu der zentralen Verwaltungseinheit 20 übertragen werden müssten.

Des Weiteren umfasst das System 10 eine Verarbeitungseinheit 108 und eine Darstellungseinheit 110 mittels welcher die von der Auswerteeinheit 106 gelieferten Auswertungsdaten weiterverarbeitet und dargestellt werden können, um einem Bediener eine Rückmeldung über die Bewertung seines Verhaltens zu geben und/oder Betriebsparameter des Flurförderzeugs F anzupassen, beispielsweise eine Maximalgeschwindigkeit oder ähnliches. In der in Figur 1 gezeigten Ausführungsform sind hierbei die Auswerteeinheit 108 und die Darstellungseinheit 110 in der zentralen Verwaltungseinheit 20 integriert, sie könnten jedoch ebenfalls in dem Fahrzeug F vorgesehen sein.

Hinsichtlich der Darstellung der Auswertungsdaten sind unterschiedliche Herangehensweisen denkbar, entweder einfache Hinweise, dass der Bediener die an ihn gestellten Erwartungen erfüllt oder gar übererfüllt hat, oder ein komplexeres System, mittels welchem vorbildliches Verhalten des Bedieners gewürdigt werden kann, beispielsweise über einen Aufstieg in einem Level-System. Hierbei versteht sich, dass entsprechende Daten zur Auswertung und Verarbeitung über beliebige geeignet lange Zeiträume gesammelt werden können und verschiedene Verhaltensweisen in Verbindung miteinander gesetzt werden können, beispielsweise um eine Gesamtbewertung der Verhaltensweisen eines Bedieners oder eine feingranulare Aufstellung seiner Verhaltensweisen zu erhalten. Ferner ist es möglich das Verhalten des Bedieners in Verhältnis zu einer Vergleichsgruppe zu setzen, beispielsweise innerhalb einer Firma oder eines Standorts. Dabei erfolgt eine Auswertung, wie sich der ausgewertete Bediener im Vergleich zu allen anderen Bedienern der Vergleichsgruppe verhält. Verhalten über dem Durchschnitt der Gruppe kann zu besonderen Belohnungen (Zusatzboni) führen.

Hierbei kann ferner eine optische und/oder akustische Anzeigeeinheit 112 vorgesehen sein, welche unmittelbar dem Flurförderzeug F zugeordnet sein kann und beispielsweise unmittelbar eine Bewertung oder ein Level des entsprechenden Bedieners ausgeben kann. Des Weiteren ist dem Flurförderzeug F eine Identifikationseinheit 114 zugeordnet, welche eine Anmeldung eines Bedieners an dem entsprechenden Flurförderzeug erlauben kann, beispielsweise über eine Schlüsselkarte oder auch eine automatische Erkennung des Bedieners anhand anatomischer Gegebenheiten. Auf diese Weise wird eine Integration mehrerer unabhängiger Flurförderzeuge F in dem System 10 erleichtert, insbesondere wenn einzelne Bediener nicht ständig dasselbe Flurförderzeug F bedienen und die zentrale Verwaltungseinheit 20 entsprechende Daten der mehreren Flurförderzeuge F sammelt.

Das mittels des Systems 10 durchzuführende erfindungsgemäße Verfahren ist ferner mittels des Flussdiagramms aus Fig. 2 verdeutlicht. Hierbei wird zunächst in Schritt S1 eine Definition von gewünschten Verhaltensweisen von Bedienern entsprechender Flurförderzeuge F vorgenommen, welche in geeigneter Weise in der Speichereinheit 100 hinterlegt werden und im Folgenden zur Auswertung entsprechender Sensordaten dauerhaft zur Verfügung stehen.

Anschließend wird in Schritt S2 im Rahmen einer Inbetriebnahme eines Flurförderzeugs F eine Identifikation des entsprechenden Bedieners mittels der Identifikationseinheit 114 durchgeführt, damit eine korrekte Zuordnung der im Folgenden aufgenommenen Sensordaten zu dem entsprechenden Bediener und eine Nachverfolgung seiner Verhaltensweisen über einen längeren Zeitraum und fahrzeugübergreifend ermöglicht wird.

Anschließend werden in Schritt S3 im Rahmen des regulären Arbeitsbetriebs des Flurförderzeugs F kontinuierlich Daten bezüglich wenigstens einer erfassbaren Betriebseigenschaft davon mittels der wenigstens einen Sensoreinheit 104 aufgenommen und dementsprechend die entsprechende Betriebseigenschaft überwacht.

**In** Schritt S4 findet anschließend ein Auswerten der derart ermittelten Daten bezüglich der wenigstens einen Betriebseigenschaft dahingehend statt, ob und in welchem Maße das Verhalten des entsprechenden Bedieners der der jeweiligen Betreibeigenschaft zugeordneten gewünschten Verhaltensform entspricht. Dieses Auswerten kann beispielsweise ein Klassifizieren anhand wenigstens einer Klassifizierungsbedingung umfassen. Hierbei können während des Auswertens je nach untersuchter Betriebsbedingung beispielsweise unterschiedliche Zeiträume analysiert werden oder einzelne Ereignisse untersucht werden.

Hieran schließt sich dann in S5 eine Darstellung und/oder eine weitere Verarbeitung der Ergebnisse der Auswertung aus Schritt S4 an, beispielsweise kann das Verhalten des entsprechenden Bedieners in ein Level-System übersetzt werden, um ihm entsprechend positive Rückmeldung für das Einhalten von erwarteten Verhaltensmustern zu geben oder seine Leistung kann auf verschiedene Weise direkt angezeigt oder ausgegeben werden. Insbesondere kann dies in einem optionalen, nachfolgenden Schritt S6 erfolgen, in welchem wenigstens ein Betriebsparameter des Fahrzeugs F angepasst wird, beispielsweise eine Maximalgeschwindigkeit oder eine mögliche Beschleunigung davon erhöht oder ein gleichzeitiges Handhaben einer Lastaufnahmevorrichtung während eines Fahrens freigegeben wird. Auch beliebige andere Anpassungen von Fahrzeugeigenschaften in Reaktion auf die Ergebnisse der Auswertung in Schritt S4 sind an dieser Stelle in Schritt S6 denkbar, wobei ein entsprechender Bediener zusätzlich über eine solche Anpassung von Fahrzeugparametern informiert werden kann, um ihm positive Rückmeldung zu geben.

## Patentansprüche

1. Verfahren zum Bewerten des Verhaltens von Bedienern von Flurförderzeugen (F), umfassend die folgenden Schritte:
- (S1) Definieren von gewünschten Verhaltensformen des Bedieners anhand wenigstens einer erfassbaren Betriebseigenschaft des Flurförderzeugs (F);
- (S3) Überwachen der wenigstens einen erfassbaren Betriebseigenschaft des Flurförderzeugs (F) mittels wenigstens einer entsprechenden Sensoreinheit (104);
- (S4) Auswerten der wenigstens einen überwachten Betriebseigenschaft anhand der definierten Verhaltensformen; und
- (S5) Darstellen und/oder Verarbeiten von Ergebnissen der Auswertung.

2. Verfahren nach Anspruch 1,
wobei der Schritt des Auswertens (S4) einen Schritt eines Klassifizierens anhand wenigstens einer vorbestimmten Klassifizierungsbedingung umfasst.

3. Verfahren nach einem der vorhergehenden Ansprüche,
ferner umfassend ein Einstufen des Bedieners gemäß einem Stufensystem auf Grundlage der Auswertung.

4. Verfahren nach einem der vorhergehenden Ansprüche,
ferner umfassend einen Schritt eines Anpassens (S6) wenigstens eines Betriebsparameters des Flurförderzeugs (F) anhand der Ergebnisse der Auswertung.

5. Verfahren nach einem der vorhergehenden Ansprüche,
ferner umfassend ein Identifizieren (S2) eines entsprechenden Bedieners bei einer Inbetriebnahme des Flurförderzeugs (F).

6. Verfahren nach einem der vorhergehenden Ansprüche,
ferner umfassend ein Übertragen von Sensordaten und/oder Ergebnissen der Auswertung an eine zentrale Verwaltungseinheit (20), welche räumlich getrennt von dem Flurförderzeug (F) vorgesehen ist.

7. Verfahren nach einem der vorhergehenden Ansprüche,
wobei das Darstellen (S5) der Ergebnisse der Auswertung eine optische und/oder akustische Ausgabe für den Bediener umfasst.

8. Verfahren nach einem der vorhergehenden Ansprüche,
wobei das Überwachen (S3) der wenigstens einen Betriebseigenschaft des Flurförderzeugs (F) eine Erfassung wenigstens einer Betriebszeit und/oder Position des Flurförderzeugs umfasst.

9. Verfahren nach einem der vorhergehenden Ansprüche,
wobei die wenigstens eine erfassbare Betriebseigenschaft eine Betriebseigenschaft eines Antriebssystems, eines elektrischen Speichersystems und/oder einer Arbeitsfunktion des Flurförderzeugs (F) umfasst.

10. System (10) zum Bewerten des Verhaltens von Bedienern von Flurförderzeugen (F) mittels eines Verfahrens nach einem der vorhergehenden Ansprüche, umfassend:
- eine Speichereinheit (100), auf welcher Daten bezüglich der gewünschten Verhaltensformen hinterlegt sind;
- wenigstens eine Sensoreinheit (104) zum Überwachen der wenigstens einen erfassbaren Betriebseigenschaft;
- eine Auswerteeinheit (106) zum Auswerten der wenigstens einen überwachten Betriebseigenschaft; und
- eine Darstellungseinheit (110) und/oder eine Verarbeitungseinheit (108).

11. System (10) nach dem vorhergehenden Anspruch,
ferner umfassend eine, vorzugsweise dem Flurförderzeug zugeordnete, Identifikationseinheit (114) zum Identifizieren eines Benutzers.

12. System nach einem der Ansprüche 9 und 10,
ferner umfassend eine zentrale Verwaltungseinheit (20), welche mit wenigstens einem Flurförderzeug (F) in Datenverbindung steht.

13. System nach einem der Ansprüche 9 bis 11,
ferner umfassend eine optische und/oder akustische Anzeigeeinheit (112), insbesondere dem Flurförderzeug (F) zugeordnet.
